Europäisches Patentamt

European Patent Office

Office européen des brevets

(19)

(11) **EP 1 402 240 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(21) Anmeldenummer: **02745111.1**

(22) Anmeldetag: **01.06.2002**

(51) Int Cl.⁷: **G01K 7/42**, F02D 21/08

(86) Internationale Anmeldenummer:
**PCT/DE2002/002014**

(87) Internationale Veröffentlichungsnummer:
**WO 2002/103312 (27.12.2002 Gazette 2002/52)**

(54) **VERFAHREN UND VORRICHTUNG ZUR ERMITTLUNG EINER TEMPERATURGRÖSSE IN EINER MASSENSTROMLEITUNG**

METHOD AND DEVICE FOR MEASURING A TEMPERATURE VARIABLE IN A MASS FLOW PIPE

PROCEDE ET DISPOSITIF DE DETERMINATION D'UNE GRANDEUR DE TEMPERATURE DANS UNE LIGNE DE FLUX MASSIQUE

(84) Benannte Vertragsstaaten:
**DE FR IT SE**

(30) Priorität: **15.06.2001 DE 10129035**

(43) Veröffentlichungstag der Anmeldung:
**31.03.2004 Patentblatt 2004/14**

(73) Patentinhaber: **ROBERT BOSCH GMBH**
**70442 Stuttgart (DE)**

(72) Erfinder:
• **WILD, Ernst**
**71739 Oberriexingen (DE)**
• **FALK, Mario**
**70195 Stuttgart (DE)**

(56) Entgegenhaltungen:
DE-A- 19 720 643        US-A- 4 060 065
US-A- 5 941 927        US-A- 6 067 800

• **"EGR RATE MEASUREMENT USING TEMPERATURES" RESEARCH DISCLOSURE, KENNETH MASON PUBLICATIONS, HAMPSHIRE, GB, Nr. 352, 1. August 1993 (1993-08-01), Seite 488 XP000395223 ISSN: 0374-4353**

**Beschreibung**

Stand der Technik

Die Erfindung betrifft ein Verfahren und eine Vorrichtung zur Ermittlung einer Temperaturgröße in einer Massenstrdmleitung.

In einigen Anwendungen, beispielsweise im Rahmen der Kraftfahrzeugtechnik, dort der Motorsteuerung, ist es von Bedeutung zu wissen, welche Temperatur in einer mit einem Drosselventil versehenen Massenstromleitung herrscht. Bei einer solchen Motorsteuerung werden solche Temperaturwerte bei der Bestimmung der Stellgrößen des Motors abhängig von einem Vorgabewert ausgewertet (vgl. z.B. DE-A 196 18 385). Eine weitere Anwendung der Auswertung eines solchen Temperaturwerts stellt die Bildung von Ist-Größen im Rahmen der Motorsteuerung z.B. im Rahmen der Lasterfassung, dar (vgt. z.B. DE-A 197 40 914). Dabei ist insbesondere zur Berücksichtigung der aktuellen Dichte des Gases die Temperatur des zuströmenden Gases vorder Drosselstelle von Interesse.

Aus der Veröffentlichung "EGR rate measurement using temperatures", Research Disclosure, Kenneth Mason Publications, Hampshire, GB, Nr.352, 1.August 1993, Seite 488, XP000395223 ISSN:0374-4353 ist es bereits bekannt, die Abgasrückführrate aus der Temperatur vor dem Abgasrückführventil, der Mischtemperatur und der Temperatur der Frischluft zu berechnen, wohingegen die Temperaturgrößen gemessen werden.

Die Bestimmung dieser Temperatur kann dabei durch einen entsprechenden Temperatursensor erfolgen, der jedoch mit Hinblick auf Aufwand und Kosten nicht empfehlenswert ist. Ferner lässt sich eine Abschätzung dieser Temperatur auf der Basis der Temperatur nach der Drosselklappe in der Massenstromleitung durch Gleichsetzen die Temperatur vor der Drosselstelle und der nach der Drosselstelle. Die Temperatur nach der Drosselstelle wird dabei gemessen. Diese näherungsweise Bestimmung der Temperatur vor der Drosselstelle ist dann nicht mehr genau genug, wenn zwischen Drosselstelle und der Temperaturmessung nach der Drosselstelle ein Massenstrom zugeführt wird, dessen Temperatur sich wesentlich von der Temperatur vor der Drosselstelle unterscheidet. Dann nämlich wird nach der Drosselstelle eine Mischtemperatur aus diesen beiden Temperaturgrößen gemessen. Bei Verbrennungsmotoren wird zwischen Drosselklappe und Saugrohrtemperaturfühler zurückgeführtes Abgas in das Saugrohr eingeleitet (Abgasrückführung). Dieses Abgas weist eine relativ hohe Temperatur auf, so dass sich die im Saugrohr gemessene Mischtemperatur von der Temperatur vor der Drosselklappe deutlich unterscheidet. Der durch das Gleichsetzen der beiden Temperaturen in diesem Fall hervorgerufene Fehler ist mit Blick auf die Genauigkeit der Motorsteuerung nicht zufriedenstellend.

Entsprechendes gilt, wenn die Temperatur vor der Drosselstelle gemessen und die nach der Drosselstelle geschätzt werden soll oder wenn eine Schätzung der Temperatur des zusätzlich eingeleiteten Gases ohne Messung ermittelt werden soll.

Vorteile der Erfindung

Die genannte Nachteile der bekannten Verfahren und Vorrichtungen werden erfindungsgemäß durch die Merkmale der unabhängigen Ansprüche 1, 4, 6 und 7 beseitigt. Durch die Modellierung der Temperatur vor der Drosselstelle in der Massenstromleitung in Abhängigkeit der Temperatur nach der Drosselstelle, der Temperatur des zusätzlich zugeführten Gasflusses und dessen Anteil am Gesamtmassenstrom wird eine genaue Bestimmung der Temperatur vor der Drosselstelle bereitgestellt, ohne dass ein zusätzlicher Temperatursensor eingesetzt werden muß.

Entsprechendes gilt bei der Modellierung der Temperatur nach der Drosselstelle in der Massenstromleitung in Abhängigkeit der Temperatur vor der Drosselstelle, der Temperatur des zusätzlich zugeführten Gasflusses und dessen Rate oder bei der Modellierung der Temperatur des zusätzlich zugeführten Gasstroms in Abhängigkeit der Temperatur nach der Drosselstelle in der Massenstromleitung, der Temperatur vor der Drosselstelle und des Anteils des zugeführten Gases in der Massenstromleitung am Gesamtstrom.

Dadurch werden in erheblichem Umfang Aufwand und Kosten eingespart.

Die Modellierung der Temperatur vor bzw. nach der Drosselklappe erfüllt dabei die Genauigkeitsvoraussetzungen in Verbindung mit der Steuerung eines Verbrennungsmotors.

Besonders vorteilhaft ist, dass das modellierte Signal mittels eines Filters, vorzugsweise eines Tiefpaßfilters gedämpft wird, um ein zu unruhiges Signal zu vermeiden. Dabei wird in vorteilhafter Weise die Zeitkonstante des Filters an den Anteil des eingeleiteten Gasflusses am Gesamtstrom angepasst, wobei die Zeitkonstante umso größer ist, je höher diese Rate ist. Dadurch wird der Einfluß von Ungenauigkeiten und Schwankungen dieses Anteils deutlich abgeschwächt.

In vorteilhafter Weise ist die geschilderte Vorgehensweise nicht nur in Verbindung mit der Steuerung eines Verbrennungsmotors anwendbar, sondern überall dort, wo eine Temperaturgröße in einer Massenstromleitung von Bedeutung ist, bei welcher nach einer Drosselstelle zusätzliche Gasströme anderer Temperatur in die Leitung eingeleitet werden.

Weitere Vorteile ergeben sich aus der nachfolgenden Beschreibung von Ausführungsbeispielen bzw. aus den abhängigen Patentansprüchen.

Zeichnung

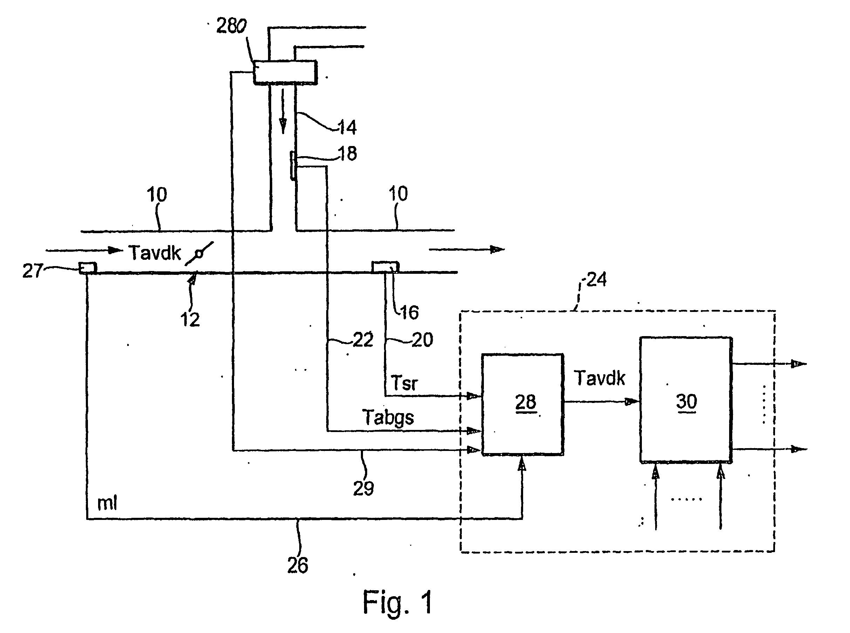

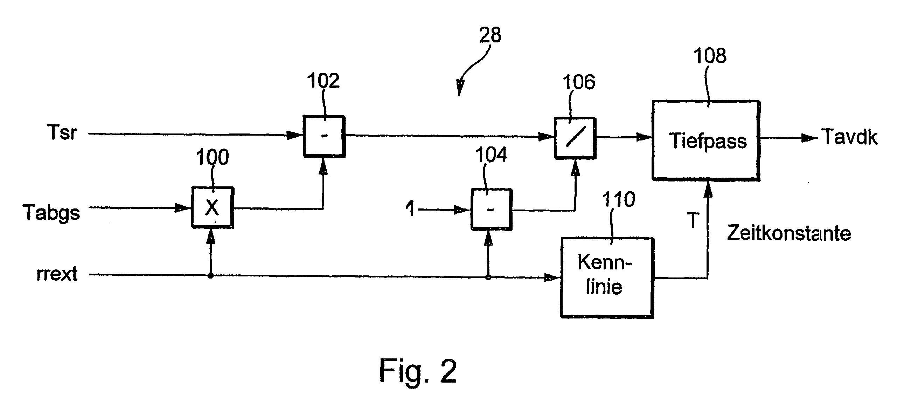

Die Erfindung wird nachstehend anhand der in der Zeichnung dargestellten Ausführungsformen näher erläutert. Figur 1 zeigt dabei ein Schaltbild einer Massenstromleitung mit Drosselstelle und Einleitung eines zusätzlichen Gasstroms sowie ein Ablaufdiagramm der zugeordneten Auswerteelektronik, während in Figur 2 ein Ablaufdiagramm dargestellt ist, welches eine konkrete bevorzugte Vorgehensweise der Modellierung der Temperatur vor der Drosselstelle im Rahmen eines Computerprogramms darstellt.

Beschreibung von Ausführungsbeispielen

In Figur 1 ist mit 10 eine Massenstromleitung dargestellt, mit einer Drosselstelle 12 und einer weiteren Massenstromleitung 14, die nach der Drosselstelle in die Massenstromleitung 10 zum Einleiten eines zusätzlichen Gasstroms mündet. Im bevorzugten Ausführungsbeispiel eines Verbrennungsmotors stellt die Massenstromleitung 10 das Saugrohr, die Drosselstelle 12 die Drosselklappe und die zusätzliche Massenstromleitung 14 die Abgasrückführleitung dar. Entsprechend der in Figur 1 dargestellten Pfeile strömt ein Gasfluß in der Massenstromleitung 10 von links nach rechts, in der Massenstromleitung 14 von oben nach unten. Ferner ist ein erster Temperatursensor 16 vorgesehen, welcher die Temperatur des strömenden Gases in der Massenstromleitung 10 nach Einleitung des zusätzlichen Massenstroms liefert. In einem Ausführungsbeispiel mißt ein weiterer Temperatursensor 18 die Temperatur des zuströmenden Gasflusses in der Massenstromleitung 14. Die entsprechenden Temperatursignale Tsr und Tabgs werden über Leitungen 20 und 22 an eine elektronische Steuereinheit 24 abgegeben. Die Temperatur des zuströmenden Gasflusses in der Massenstromleitung 14 wird in einem anderen Ausführungsbeispiel z.B. auf der Basis der Temperatur des Abgases des Verbrennungsmotors berechnet.

Ferner wird der Steuereinheit 24 über die Eingangsleitung 26 ein Signal ml zugeführt, welches ein Maß für die Gasströmung des Gasflusses in der Massenstromleitung 10 darstellt. Dieses Signal wird mittels eines Massenstrommessers 27 ermittelt. Ferner wird der Steuereinheit 24 in einem Ausführungsbeispiel eine Größe über eine Eingangsleitung 29 zugeführt, die die Stellung eines Ventils 280 in der Massenstromleitung 14 repräsentiert. In der elektronischen Steuereinheit 24 ist wenigstens ein Mikrocomputer vorgesehen, welcher Programme zur Auswertung der zugeführten Signale und gegebenenfalls zur Bildung von Steuergrößen zur Steuerung von mit den Massenstromleitungen zusammenhängenden Aggregaten ausgibt. Im bevorzugten Ausführungsbeispiel stellt die elektronische Steuereinheit 24 eine elektronische Motorsteuerung dar, welche in Abhängigkeit einer Vielzahl von Eingangsgrößen Stellgrößen zur Einstellung von Zündung, Luftzufuhr, Kraftstoffzufuhr, etc. eines Verbrennungsmotors ermittelt.

Die in dem in Figur 1 nicht dargestellten Mikrocomputer ablaufenden Programme sind in Figur 1 anhand der Blöcke 28 und 30 mit Blick auf die nachfolgend beschriebene Vorgehensweise zur Modellierung der Temperatur Tavdk vor der Drosselstelle 12 symbolisiert. Dem Modell 28 werden die obengenannten Temperaturgrößen und die Strömungsgröße. Zunächst wird der Anteil des Massenstroms in der Leitung 14 am Gesamtstrom nach der Einmündung der Leitung 14 in die Leitung 10 als Verhältnis des Massenstroms msagr in der Leitung 14 zum Gesamtstrom (msagr + ml) gebildet. Je nach Ausführungsbeispiel werden . die einzelnen Massenströme durch Massenstrommesser gemessen (wie oben anhand des Massenstroms ml gezeigt) oder mittels Modellen berechnet. Im Anwendungsfall einer Brennkraftmaschine mit Abgasrückführung wird z.B. der Luftmassenstrom, der über die Drosselklappe 12 in der Leitung 10 strömt, gemessen (Lufrmassenmesser 27) oder aus Drosselklappenstellung, der Temperatur in Strömungsrichtung vor der Drosselklappe, dem Druck vor der Drosselklappe und dem Druckverhältnis an der Drosselklappe ermittelt. Der Massenstrom in der Leitung 14 wird z.B. aus der Stellung des Abgasrückführventils 280, der Temperatur in Strömungsrichtung vor dem Ventil, dem Druck vor dem Ventil und dem Druckverhältnis an dem Ventil berechnet, wobei in einem Ausführungsbeispiel die Temperatur vor dem Ventil aus der Abgastemperatur und dem Massenstrom in der Leitung 14 bestimmt wird.

Nach dem nachfolgend im Detail beschriebenen Modell wird aus den genannten Größen die Temperatur vor der Drosselstelle 12 Tavdk abgeschätzt. Diese wird in den Steuerprogrammen 30 zusammen mit anderen Betriebsgrößen zu Stellgrößen verarbeitet, die von der Steuereinheit 24 an entsprechende Stellelemente ausgegeben werden. Im bevorzugten Ausführungsbeispiel der Steuerung eines Verbrennungsmotors sind solche Vorgehensweisen beispielsweise aus dem eingangs genannten Stand der Technik bekannt.

In dem in Figur 1 dargestellten Ausführungsbeispiel wird die Temperatur vor der Drosselstelle 12 auf der Basis der Temperatur des zusätzlichen Gasmassenstroms und der Temperatur nach Einleitung dieses zusätzlichen Gasmassenstroms sowie des Anteils dieses zusätzlichen Massenstroms am Gesamtstrom gebildet. Zur Bestimmung der Temperatur sind somit zwei Temperaturgrößen und eine den Anteil des zusätzlichen Massenstroms am Gesamtstroms (im folgenden Rate genannt) repräsentierende Größe notwendig. Somit wird eine Temperaturgröße auf der Basis zweier anderen nach Maßgabe eines entsprechend dem nachfolgend beschriebenen Modell aufgebauten Modells ermittelt (Temperatur vor Drosselstelle = f(Temperatur des zusätzlichen Massenstroms, Mischtemperatur) oder Temperatur des zusätzlichen Massenstroms = f(Temperatur vor Drosselstelle, Mischtemperatur) oder Mischtemperatur = f(Temperatur vor Drosselstelle, Temperatur des zusätzlichen Massenstroms)).

Die bevorzugte Anwendung findet jedoch im Rahmen der in Figur 1 dargestellten Konfiguration in Verbindung mit der Steuerung eines Verbrennungsmotors statt. Durch die Modellierung der Temperatur vor der Drosselklappe wird die Genauigkeit der Einstellung der Drosselklappe und die Berechnung des Luftstroms über der Drosselklappenstellung gemäß dem eingangs genannten Stand der Technik verbessert. Dadurch wird auch dazu beigetragen, Abgasbestimmungen ohne Messung der Luftströmung in der Saugrohrleitung 10 einzuhalten.

Figur 2 zeigt eine konkrete Vorgehensweise zur Modellierung der gewünschten Temperatur.

Figur 2 beschreibt dabei ein Programm eines Mikrocomputers der Steuereinheit 24, wobei die einzelnen Blöcke Programmteile, Programme oder Programmschritte darstellen, während die Verbindungslinien den Informationsfluß skizzieren. Das Ablaufdiagramm der Figur 2 stellt eine bevorzugte Ausführung des Modells 28 dar.

Mit der Kenntnis des Anteils des zusätzlichen Massenstroms am Gesamtstrom (Abgasrückführrate rrext), der Temperatur dieses Gases (Tabgs) an der Einleitstelle zum Saugrohr sowie der in der Massenstromleitung gemessenen Mischtemperatur (Saugrohrlufttemperatur Tasr) wird die Temperatur vor der Drosselstelle Tavdk nach der folgenden Formel bestimmt:

$$Tavdk = (Tsr - rrext * Tabgs)/(1 - rrext)$$

Der Maximalwert der Rate rrext ist in diesem Ausführungsbeispiel 1. Wird ein anderer Wert als Maximalwert vorgegeben, muss die Gleichung entsprechend angepasst werden.

Die direkte Umsetzung der Formel liefert ein unruhiges Signal, welches zur Auswertung im Rahmen von Steuervorgängen nicht besonders geeignet ist. Deshalb wird ein Filter, vorzugsweise ein Tiefpaßfilter, eingesetzt, um die ermittelte Modellausgangsgröße zu dämpfen. Die Zeitkonstante des Filters wird dabei umso größer gewählt, je höher der Anteil des zusätzlichen Massenstroms am Gesamtstrom ist. Der Einfluß der Ungenauigkeiten und Schwankungen in diesem Anteil werden dadurch abgeschwächt.

Das in Figur 2 dargestellten Ablaufdiagramm des Modells liest die Abgastemperatur Tabgs und die Abgasrückführrate rrext ein. In einer Multiplikationsstelle 100 werden die beiden Größen multiplikativ verknüpft. Das Produkt der beiden Größen wird einer Subtraktionsstelle 102 zugeführt, in der das Produkt von der Saugrohrtemperatur Tsr abgezogen wird. Ferner wird die Abgasrückführrate in der Subtraktionsstelle 104 von dem Wert 1 abgezogen. Diese Differenz sowie die Differenz, die in der Subtraktionsstelle 102 gebildet wurde, werden einer Divisionsstelle 106 zugeführt, wobei die Differenz aus 102 durch die Differenz aus 104 geteilt wird. Das Ergebnis, das Rohsignal vor der Temperatur vor der Drosselstelle, wird einem Tiefpaßfilter 108 zugeführt. Dessen Zeitkonstante T wird aus einer Kennlinie 110 abgeleitet, deren Eingangsgröße die Abgasrückführrate rrext ist. Die Kennlinie ist dabei derart gestaltet, dass je größer die Abgasrückführrate ist, desto größer die Zeitkonstante ist, d.h. desto ausgeprägter die Filterwirkung. Das von dem Tiefpaß geglättete Rohsignal stellt dann das auswertbare Signal für die Temperatur vor der Drosselstelle Tavdk dar, welches im weiteren Verlauf beispielsweise im Rahmen der eingangs genannten Vorgehensweisen ausgewertet werden.

Basis des Modells ist der Zusammenhang, dass sich die Mischtemperatur nach Einleitung des zusätzlichen Gasmassenstroms aus dem Anteil dieses Gasmassenstroms am Gesamtstrom mal ihrer Temperatur sowie der von seinem Maximalwert abgezogenen Anteil mal der Temperatur vor der Drosselstelle zusammensetzt:

$$Tsr = rrext*Tabgs + (1-rrext)*Tavdk$$

Bei Messung der Luftströmung ml in der Massenstromleitung 10 wird dieser Zusammenhang wie folgt dargestellt:

$$Tsr = (1-msagr/(msagr+ml))*Tabgs + (msagr/(msagr+ml))*Tavdk$$

wobei msagr der Massenstrom in der Leitung 14 ist.

Auf der Basis eines dieser Zusammenhänge wird bei Kenntnis der Temperatur vor der Drosselstelle und der Temperatur des zusätzlichen Gasstromes die Mischtemperatur Tsr modelliert bzw. bei Kenntnis der Temperatur vor der Drosselstelle und der Mischtemperatur die Temperatur des zusätzlichen Gasflusses ermittelt. Ferner ist die Kenntnis der den Gesamtstrom bildenden Massenströme oder des Anteils eines dieser Teilströme am Gesamtstrom notwendig (wie oben der Anteil rrext des zusätzlichen Massenstrom, in einer anderen Ausführung bei Umformulierung des Zusammenhangs der Anteil rrml des Massenstroms in der Leitung 10 am Gesamtstrom).

**Patentansprüche**

1. Verfahren zur Ermittlung einer Temperaturgröße in einer Massenstromleitung, wobei eine erste Massenstromleitung eine Drosselstelle (12) aufweist und wobei in die erste Massenstromleitung nach der Drosselstelle eine weitere Massenstromleitung zur Einleitung eines zusätzlichen Gasstromes einmündet, wobei eine Größe für den Anteil des zusätzlichen Gasmassenstroms am Gesamtstrom oder für den Anteil des Gasmassenstroms in der ersten Massenstromleitung am Gesamtstrom und eine Größe für wenigstens zwei der folgenden Temperaturen ermittelt wird: der Temperatur des zusätzlichen Gasstromes, der Temperatur vor der Drosselstelle und der Temperatur nach Einleitung des zusätzlichen Gasstromes, **dadurch gekennzeichnet, dass** auf der Basis der Anteitsgröße und der wenigstens zwei der Temperaturgrößen die dritte Temperaturgröße berechnet wird, dass die ermittelte Temperaturgröße mittels eines Filters variabler Zeitkonstante geglättet wird und dass die Zeitkonstante abhängig vom Anteil des eingeleiteten Gasflusses am Gesamtstrom angepasst wird, wobei die Zeitkonstante umso größer ist, je höher dieser Anteil ist.

2. Verfahren nach Anspruch 1, **dadurch gekennzeichnet, dass** die Zeitkonstante aus einer Kennlinie ausgelesen wird.

3. Verfahren nach einem der vorhergehenden Ansprüche, **dadurch gekennzeichnet, dass** die Massenstromleitung die Saugrohrleitung einer Brennkraftmaschine ist, die Drosselstelle deren Drosselklappe und die eingeleitete Gasströmung des rückgeführten Abgases ist.

4. Vorrichtung zur Ermittlung einer Temperaturgröße in einer Massenstromleitung, wobei eine erste Massenstromleitung eine Drosselstelle (12) aufweist und wobei in die erste Massenstromleitung nach der Drosselstelle eine weitere Massenstromleitung zur Einleitung eines zusätzlichen Gasstromes zugeführt wird, mit einer Steuereinheit, welche eine Größe für den Anteil des zusätzlichen Gasmassenstroms am Gesamtstrom oder für den Anteil des Gasmassenstroms in der ersten Massenstromleitung am Gesamtstrom ermittelt, welche eine Größe von wenigstens zwei derfolgenden Temperaturen bestimmt: der Temperatur des zusätzlichen Gasstromes, der Temperatur vor der Drosselstelle und der Temperatur nach Einleitung des zusätzlichen Gasstromes, **dadurch gekennzeichnet, dass** die Steuereinheit (24) ein Modell umfasst, welches auf der Basis der Anteilsgröße und wenigstens zwei der Temperaturgrößen die dritte Temperaturgröße berechnet, dass ein Filter variabler Zeitkonstante vorgesehen ist, das die ermittelte Temperaturgröße glättet, wobei die Zeitkonstante abhängig vom Anteil des eingeleiteten Gasflusses am Gesamtstrom angepasst wird, wobei die Zeitkonstante umso größer ist, je höher dieser Anteil ist.

5. Vorrichtung nach Anspruch 4, **dadurch gekennzeichnet, dass** die Steuereinheit eine Motorsteuereinheit für einen Verbrennungsmotor ist und die Temperaturgröße zur Bildung von Steuergrößen für den Motor ausgewertet wird.

6. Computerprogramm mit Programmcodemitteln, um alle Schritte von jedem beliebigen der Ansprüche 1 bis 3 durchzuführen, wenn das Programm auf einem Computer ausgeführt wird.

7. Computerprogrammprodukt mit Programmcodemitteln, die auf einem computerlesbaren Datenträger gespeichert sind, um das Verfahren nach jedem beliebigen der Ansprüche 1 bis 3 durchzuführen, wenn das Programmprodukt auf einem Computer ausgeführt wird.

**Claims**

1. Method for determining a temperature variable in a mass flow line, a first mass flow line having a throttle point (12) and a further mass flow line for introducing an additional gas flow opening into the first mass flow line downstream of the throttle point, a variable for the fraction of the additional gas mass flow in the overall flow, or for the fraction of the gas mass flow in the first mass flow line in the overall flow being determined, and a variable for at least two of the following temperatures being determined: the temperature of the additional gas flow, the temperature upstream of the throttle point and the temperature after introduction of the additional gas flow, **characterized in that** the third temperature variable is calculated on the basis of the size of the fraction and of at least two of the temperature variables, **in that** the temperature variable determined is smoothed with the aid of a filter of variable time constant, and **in that** the time constant is adapted as a function of the fraction of the gas flow introduced in the overall flow, the time constant being larger the higher this fraction.

2. Method according to Claim 1, **characterized in that** the time constant is read out from a characteristic line.

3. Method according to one of the preceding claims, **characterized in that** the mass flow line is the induction pipe of an internal combustion engine, the throttle point is the throttle valve thereof, and the gas flow introduced is the recirculated exhaust gas.

4. Device for determining a temperature variable in a mass flow line, a first mass flow line having a throttle point (12) and a further mass flow line for introducing an additional gas flow being fed into the first mass flow line downstream of the throttle point, having a control unit which determines a variable for the fraction of the additional gas mass flow within the overall flow or for the fraction of the gas mass flow in the first mass flow line in the overall flow, which determines a variable for at least two of the following temperatures: the temperature of the additional gas flow, the temperature upstream of the throttle point and the temperature following introduction of the additional gas flow, **characterized in that** the control unit (24) comprises a model which calculates the third temperature variable on the basis of the size of the fraction and at least two of the temperature variables, **in that** a filter of variable time constant is provided which smoothes the temperature variable determined, the time constant being adapted as a function of the fraction of the gas flow introduced in the overall flow, the time constant being larger the higher this fraction.

5. Device according to Claim 4, **characterized in that** the control unit is an engine control unit for an internal combustion engine, and the temperature variable is evaluated for forming control variables for the engine.

6. Computer program with program coding means for carrying out all the steps of any desired one of Claims 1 to 3 when the program is run on a computer.

7. Computer programming product with program coding means which are stored on a computer-readable data carrier in order to carry out the method according to any one of Claims 1 to 3 when the program product is run on a computer.


**Revendications**

1. Procédé de détermination d'une grandeur de température dans une conduite de flux massique, une première conduite de flux massique présentant un point d'étranglement (12) avec dans cette première conduite de flux massique, en aval du point d'étranglement, une autre conduite de flux massique débouchant pour introduire un flux de gaz supplémentaire, selon lequel on détermine une grandeur pour la proportion du flux massique de gaz supplémentaire par rapport au flux total ou pour la proportion du flux massique de gaz dans la première conduite de flux massique par rapport au flux total, et une grandeur pour au moins deux des températures suivantes : la température du flux de gaz supplémentaire, la température en amont du point d'étranglement et la température après l'introduction du flux de gaz supplémentaire,
**caractérisé en ce qu'**
on calcule à partir de la grandeur de proportion et des au moins deux grandeurs de température une troisième grandeur de température, et la grandeur de température calculée est lissée au moyen d'un filtre d'une constante de temps variable, et la constante de temps est adaptée au flux total en fonction de la proportion du flux de gaz introduit, la constante de temps étant d'autant plus grande que cette proportion est importante.

2. Procédé selon la revendication 1,
**caractérisé en ce que**
la constante de temps est extraite d'une ligne caractéristique.

3. Procédé selon l'une quelconque des revendications précédentes,
**caractérisé en ce que**
la conduite de flux massique est la conduite d'aspiration d'un moteur à combustion interne, le point d'étranglement étant le clapet d'étranglement de celui-ci et le flux de gaz introduit étant celui de gaz d'échappement recyclés.

4. Dispositif de détermination d'une grandeur de température dans une conduite de flux massique, une première conduite de flux massique présentant un point d'étranglement (12) avec dans cette première conduite de flux massique, en aval du point d'étranglement, une autre conduite de flux massique débouchant pour introduire un flux de gaz supplémentaire, comprenant une unité de commande qui détermine une grandeur pour la proportion du flux massique de gaz supplémentaire par rapport au flux total ou pour la proportion du flux massique de gaz dans la première conduite de flux massique par rapport au flux total, et une grandeur pour au moins deux des températures suivantes : la température du flux de gaz supplémentaire, la température en amont du point d'étranglement et la température après l'introduction du flux de gaz supplémentaire,

**caractérisé en ce que**

l'unité de commande (24) comprend un modèle qui, à partir de la grandeur de proportion et des au moins deux grandeurs de température calcule une troisième grandeur de température, un filtre d'une constante de temps variable est prévu pour lisser la grandeur de température calculée, la constante de temps étant adaptée au flux total en fonction de la proportion du flux de gaz introduit, la constante de temps étant d'autant plus grande que cette proportion est importante.

5. Dispositif selon la revendication 4,

   **caractérisé en ce que**

   l'unité de commande est une unité de commande de moteur pour un moteur à combustion interne, la grandeur de température étant exploitée pour former des grandeurs de commande pour le moteur.

6. Programme informatique comprenant des moyens de codage de programme permettant de réaliser toutes les étapes de chacune des revendications 1 à 3 lorsque le programme est exécuté sur un ordinateur.

7. Produit de programme informatique comprenant des moyens de codage de programme stockés sur un support de données lisibles par ordinateur, permettant de réaliser toutes les étapes de chacune des revendications 1 à 3 lorsque le programme est exécuté sur un ordinateur.

Fig. 1

Fig. 2

EP 1 402 240 B1